# EUROPEAN PATENT SPECIFICATION

(11) **EP 4 391 204 B1**
(45) Date of publication and mention of the grant of the patent: **28.01.2026**
(21) Application number: 22884037.7
(22) Date of filing: 19.10.2022
(51) Int. Cl.: H01M 50/531, B65H 35/00, B26F 1/12, H01M 10/04, H01M 4/04

(54) **NOTCHING SYSTEM FOR ELECTRODE SHEET**
KERBUNGSSYSTEM FÜR ELEKTRODENPLATTE
SYSTÈME D'ENCOCHAGE POUR FEUILLE D'ÉLECTRODE

(30) Priority: 19.10.2021 KR 20210139571
(43) Date of publication of application: 26.06.2024
(73) Proprietor: LG Energy Solution, Ltd., Seoul 07335 (KR)
(72) Inventor: LI, Zheng Hua, Daejeon 34122 (KR); PARK, Ki Beom, Daejeon 34122 (KR); SONG, Eui Seob, Daejeon 34122 (KR); LEE, Hyo Joon, Daejeon 34122 (KR); YEE, Min Ha, Daejeon 34122 (KR); SONG, Eun Ji, Daejeon 34122 (KR)
(74) Representative: Plasseraud IP
(86) International application number: PCT/KR2022/015970
(87) International publication number: WO 2023/068815

(56) References cited:
- WO-A1-2021/182656
- JP-A- 2019 125 499
- KR-A- 20130 073 300
- KR-A- 20150 062 839
- KR-A- 20210 052 050
- KR-A- 20210 104 264

## Description

### TECHNICAL FIELD

The present invention relates to a notching system for an electrode sheet in which slurry is applied to a surface of a collector made of a thin metal, and more particularly, to a notching system for an electrode sheet, which is capable of preventing breakage of the electrode sheet or surface scratches caused by foreign substances (graphite powder) when notching processing is performed.

### BACKGROUND ART

Lithium secondary batteries that are chargeable/dischargeable and lightweight and have high output densities are being widely used as energy sources for various devices.

In addition, lithium secondary batteries have attracted considerable attention as power sources for hybrid electric vehicles (HEVs), plug-in hybrid electric vehicles (PHEVs), battery electric vehicles (BEVs), and electric vehicles (EVs), which have been developed to solve limitations, such as air pollution and green-house gases, caused by existing internal-combustion engine vehicles that use fossil fuels, such as, gasoline and diesel vehicles.

In general, such a secondary battery has a structure comprising an electrode assembly having a structure in which electrodes (a negative electrode and a positive electrode) and a separator are alternately stacked, an electrolyte allowing ions to move to the electrodes, and a case in which the electrode assembly and the electrolyte are accommodated.

Also, a process of manufacturing the secondary battery is largely classified into an electrode plate process of manufacturing each of a positive electrode and a negative electrode, an assembly process of inserting an electrode assembly together with an electrolyte into a case after the electrode assembly is manufactured by using the positive electrode and the negative electrode, and a formation process of activating movement of ions of the electrode assembly. Each of the electrode plate process, the assembly process, and the formation process is divided into detailed processes.

Here, the electrode plate process comprises a mixing process of adding and mixing an active material, a conductive material, and a binder to prepare slurry, a coating process of applying the mixed slurry on the collector, a press process of pressing the slurry onto a surface of the collector, and a process (notching process) of shearing the electrode sheet so that the electrode sheet in which the slurry adheres to the surface of the collector is cut to a proper size to form an electrode tab (or cut to a proper size and simultaneously form an electrode tab).

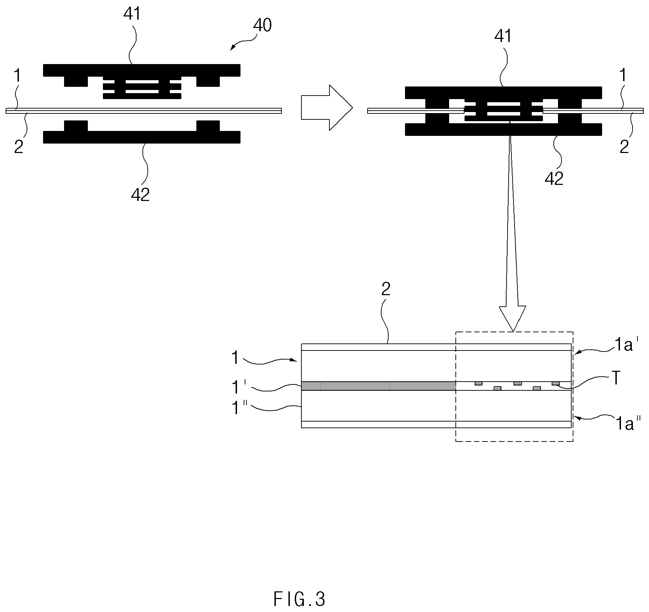

Here, a coating portion to which the slurry is applied (coated) and a non-coating portion to which the slurry is not applied are formed on the collector. That is, the electrode sheet has a structure in which the slurry is applied in a narrower width than the collector, but the slurry is not applied to an intermediate portion along a longitudinal direction so that the non-coating portion is formed between the coating portions that are disposed at both sides thereof (see FIG. 3).

In addition, the notching process is performed by punching the electrode sheet using a notching device 7 so that the electrode tab T (see FIG. 3) remains, and remaining portion is cut. The notching device 7 includes a lower mold disposed below the electrode sheet 1 and an upper mold disposed above the electrode sheet 1, and the upper mold descends to hit the non-coating portion of the electrode sheet 1 to process the electrode tab T at the non-coating portion.

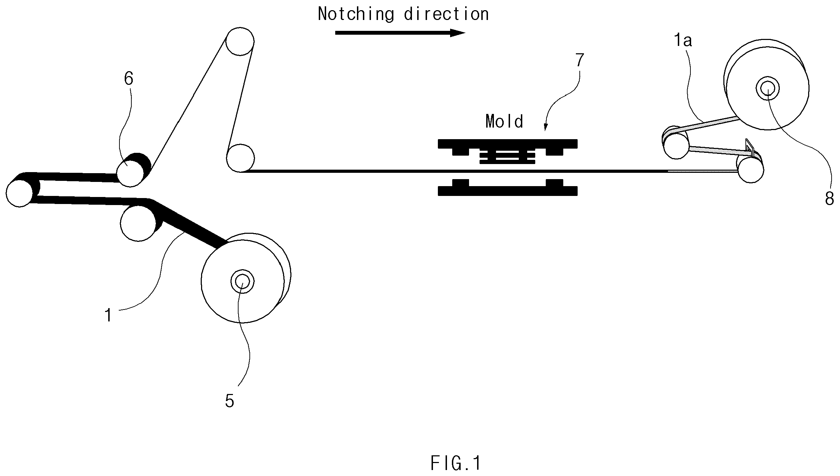

Therefore, as illustrated in FIG. 1, in which the notching system according to the related art is simplified, the notching system of the electrode sheet according to the related art includes an electrode unwinder 5 from which the electrode sheet 1 is unwound to be continuously supplied, a notching device 7 disposed in a path, along with the electrode sheet 1 is transferred, to notch the electrode tab at the non-coating portion, and a rewinder 8 winding 'the notched electrode sheet 1a'. In addition, rollers 6 for changing the transfer path of the electrode substrate 1 may be provided.

When the electrode sheet 1 is a negative electrode, the collector is made of copper and has a structure in which negative electrode slurry is applied, and when the electrode sheet 1 is a positive electrode, the collector is made of aluminum, and positive electrode slurry is applied.

Here, in the case of the positive electrode, when the notching process is performed, there is a problem in that tearing, cutting (disconnection), or damage occurs due to insufficient elasticity of a material of the collector made of aluminum. Such the tearing, cutting, or breakage delays a processing time of the notching processing, which is a continuous process, to increase a loss due to disposal.

In addition, in the case of the negative electrode, graphite in the form of powder is contained in the negative electrode slurry. In addition, there is a problem in that graphite is separated from the surface of the electrode sheet 1 to adhere to the plurality of rollers 6. Graphite accumulated by adhering to the surfaces of the rollers 6 may cause scratches on the surface of the electrode sheet 1 while the electrode sheet 1 is transferred.

Documents WO 2021/182656 A1, KR 2013/0073300 A and KR 2021/0052050 A refer to notching devices for manufacturing electrode sheets.

### DISCLOSURE OF THE INVENTION

### TECHNICAL PROBLEM

Therefore, a main object of the present invention is to provide a notching system for an electrode sheet, which is capable of preventing a problem of tearing, cutting, or damage of the electrode sheet and solving a problem of scratches due to smearing on the surface of the electrode sheet.

### TECHNICAL SOLUTION

To this end, the invention relates to a notching device according to claim 1.

The notching device after the invention may present one or more feature(s) of dependent claims 2 to 9, in any combination allowed by the claims.

### ADVANTAGEOUS EFFECTS

In the present invention having the configuration as described above, since the notching processing is performed in the state in which the electrode sheet and the protective film are stacked, the problem such as the cutting and tearing of the electrode sheet and the problem of causing the scratches due to the separation of the graphite powder from the surface of the electrode sheet may be prevented or minimized.

That is, the protective film may disperse the tension applied to the electrode sheet to restrict the cutting, and the surface of the electrode sheet may be covered by the protective film to fundamentally prevent the graphite powder from being separated.

In addition, the tension roller may be further provided to adjust the tension applied to the electrode sheet being transferred.

The protective film has the width greater than that of the electrode sheet so that the portion of the protective film protrudes from each of both the sides of the electrode sheet when the protective film is stacked with the electrode sheet, and thus, when the electrode sheet and the protective film are attached to each other, even though the electrode sheet is separated from the regular position, the possibility of the separation of the protective film may be reduced.

The electrode sheet may be divided into the first processing body and the second processing body after being subjected to the notching processing and then collected from each of the first rewinder and the second rewinder so as to be collected for each processed product.

The film collecting device that collects the protective film from the notched electrode sheet may be further provided, and thus, the protective film may be provided in the detached state.

### BRIEF DESCRIPTION OF THE DRAWINGS

FIG. 1 is a schematic view of a notching system according to a related art.
FIG. 2 is a schematic view of a notching system according to a first embodiment of the present invention.
FIG. 3 is a view illustrating a process in which notching process is performed in a notching device and an enlarged view of a notched portion.
FIG. 4 is a schematic view of a notching system according to a second embodiment of the present invention.

### MODE FOR CARRYING OUT THE INVENTION

Hereinafter, preferred embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein.

In order to clearly describe the present invention, parts irrelevant to the description are omitted, and the same reference numerals are assigned to the same or similar components throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention relates to a notching system of an electrode sheet, which is capable of preventing or minimizing an occurrence of cutting and scratching of the electrode sheet. Hereinafter, embodiments according to the present invention will be described in more detail with reference to the accompanying drawings.

### First embodiment

In the present invention, a notching system capable of preventing an electrode sheet 1 from being cut while a notching process is performed in a state in which a protective film 2 is stacked on one surface of the electrode sheet 1 is provided as a first embodiment.

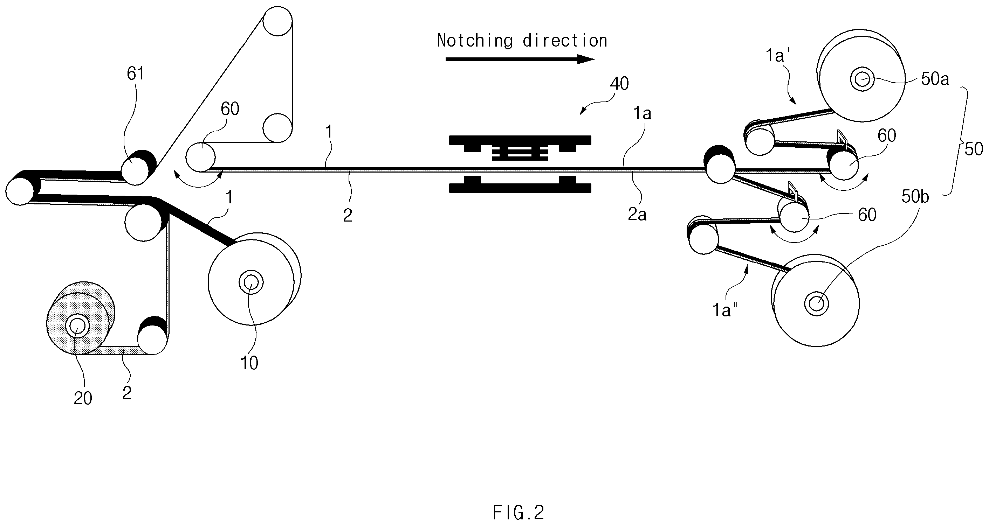

Referring to FIG. 2 that illustrates the simplified notching system according to the first embodiment of the present invention, the notching system provided in this embodiment includes an electrode unwinder 10, a film unwinder 20, and a notching device 40, and a rewinder 50.

The electrode unwinder 10 rotates in a unwinding direction in a state in which the electrode sheet 1 that is coated with slurry on a surface of a collector to continuously unwind the electrode sheet 1.

Although the electrode sheet 1 provided in this embodiment is used for a negative electrode sheet, since an object of the present invention is to relatively simplify a process, reduce production costs, and prevent the electrode sheet 1 from being cut or damaged, it is preferable that the electrode sheet is used for a positive electrode sheet. That is, the electrode sheet 1 provided in this embodiment is provided by applying positive electrode slurry on a surface of a positive electrode collector made of aluminum.

The protective film 2 is wound around the film unwinder 20. The protective film 2 is wound to have a length greater than that of the electrode sheet 1 so that the electrode sheet 1 is continuously unwound while the unwinding of the electrode sheet 1 is continued.

In addition, the protective film 2 and the electrode sheet 1 are wound from the film unwinder 20 and the electrode unwinder 10, respectively, and then meet each other in a transfer path as to stacked (matched) on each other and are transferred in the stacked state.

That is, as illustrated in FIG. 2, the protective film 2 and the electrode sheet 1 are stacked before passing through a roller that passes first in the transfer path among a plurality of rollers 61. Then, the protective film 2 and the electrode sheet 1 are in close contact with each other while each of the rollers moves in the state in which the protective film 2 and the electrode sheet 1 are stacked.

Here, as illustrated in FIG. 3 that illustrates a process in which notching process is performed in the notching device 40 and an enlarged view of a notched portion, the protective film 2 has a width that is slightly greater than that of the electrode sheet 1 so that a portion of the protective film 2 protrudes to each of both sides of the electrode sheet 1 when the protective film 2 is stacked on the electrode sheet 1.

That is, referring to FIG. 3, when the electrode sheet 1 provided in the present invention is viewed from top to bottom, a coating portion 1" coated with slurry and a non-coating portion 1' that is not coated with the slurry are formed on the surface of the collector. As illustrated in the drawing, the non-coating portion 1' is formed in a longitudinal direction between the coating portions 1" disposed at both the sides and coated with the slurry.

Thus, the protective film 2 protrudes further by a predetermined length from each of ends of the coating portions 1" disposed at both the sides of the collector in a width direction (vertical direction in FIG. 3).

The protective film 2 is transferred with the electrode sheet 1 through the plurality of rollers 61 in the stacked state as illustrated in FIG. 3, and at least one or more of the plurality of rollers 61 are provided as tension rollers 60 that are rotatable and slidable.

That is, each of the tension rollers 60 is disposed in the path along which the electrode sheet 1 and the protective film 2 are transferred in the stacked state and is slid to be reciprocated in a predetermined direction (for example, a vertical direction or a left and right direction in FIG. 2) to apply a pressure to the electrode sheet 1 and the protective film 2 so that tension is maintained within a predetermined range.

While being transferred by passing through the plurality of rollers 61, transfer directions of the electrode sheet 1 and the protective film 2 are changed, but enter the notching device 40 in a horizontal state. Here, the protective film 2 enters in a state of being disposed on a bottom surface of the electrode sheet 1. That is, in FIG. 2, in the state in which the protective film 2 is disposed at a lower side, and the electrode sheet 1 is disposed at an upper side, the protective film 2 and the electrode sheet 1 enter the notching device 40.

Thus, when the electrode sheet 1 and the protective film 20 are provided in the state of being staked on each other, the notching device 40 performs the notching processing on the non-coating portion 1' of the electrode sheet 1, which is not coated with the slurry.

The notching device 40 includes a lower mold 42 disposed below the electrode sheet 1 and an upper mold 41 disposed above the electrode sheet 1. In addition, when the electrode sheet 1 is disposed between the lower mold 42 and the upper mold 41, as illustrated in FIG. 3, since the upper mold 41 and the lower mold 42 are slid vertically to hit (punch) the electrode sheet 1, thereby performing the notching processing so that the electrode tab T is formed in a predetermined shape on the non-coating portion 1' of the electrode sheet 1.

When only the upper mold 41 ascends in a state in which the lower mold 42 is fixed, the upper mold 41 hits the electrode sheet first to prevent or minimize deterioration in processibility due to attachment of the protective film 2.

The upper mold 41 and the lower mold 42 hit the non-coating portion 1' so that the electrode tab remains, and remaining portion is removed. Thus, as illustrated in FIG. 3, the electrode tab T is formed at both the sides of the non-coating portion, and the electrode sheet 1 and the protective film 2 are divided into a first processing body 1a' and a second processing body 1a" in the notching device 40 in a longitudinal direction.

In addition, the rewinder 50 individually winds the first and second processing bodies 1a' and 1a" of the notched electrode sheet 1.

That is, the rewinder 50 includes a first rewinder 50a around which the first processing body 1a' is wound and a second rewinder 50b around which the second processing body 1a" is wound.

One of the first rewinder 50a and the second rewinder 50b is disposed at a height lower than the notching device 40, and the other is disposed at a height higher than the notching device 40, and thus, the first rewinder 50a and the second rewinder 50b independently wind the first processing body 1a' and the second processing body 1a", respectively. Here, the tension roller 60 and the rollers that are changed in traveling path may be selectively disposed while the first processing body 1a' and the second processing body 1a" move to the first rewinder 50a and the second winder 50b, respectively.

The first processing body 1a' and the second processing body 1a" are wound in the state in which the protective film 2 is stacked on the electrode sheet 1. Thus, a film collecting device (not shown) that separates and collect the protective film 2 from the electrode sheet 1 before the first processing body 1a' and the second processing body 1a" is put into the next process may be added.

The film collecting device may wind only the protective film 2 to be provided in the separated shape when the first processing body 1a' and the second processing body 1a", which are wound around the first rewinder 50a and the second rewinder 50b, are separated. The film collecting device may have a structure that rotates at the same time together with the first rewinder 50a and the second rewinder 50b to wind the first processing body 1a' and the second processing body 1a" in a state in which an end of the protective film 2 is fixed, thereby separating only the protective film 2, or may have a structure of known another separation device.

Alternatively, the film collecting device may be disposed before reaching the first rewinder 50a and the second rewinder 50b to remove the protective film 2 from the first processing body 1a' and the second processing body 1a", which are notched, and be configured to wind only the electrode sheet 1 around the first rewinder 50a and the second rewinder 50b.

### Second embodiment

In the present invention, a notching system that performs notching processing in a state in which protective films 2 and 3 are stacked on both surfaces of an electrode sheet 1 to prevent scratches caused by graphite powder is provided as a second embodiment.

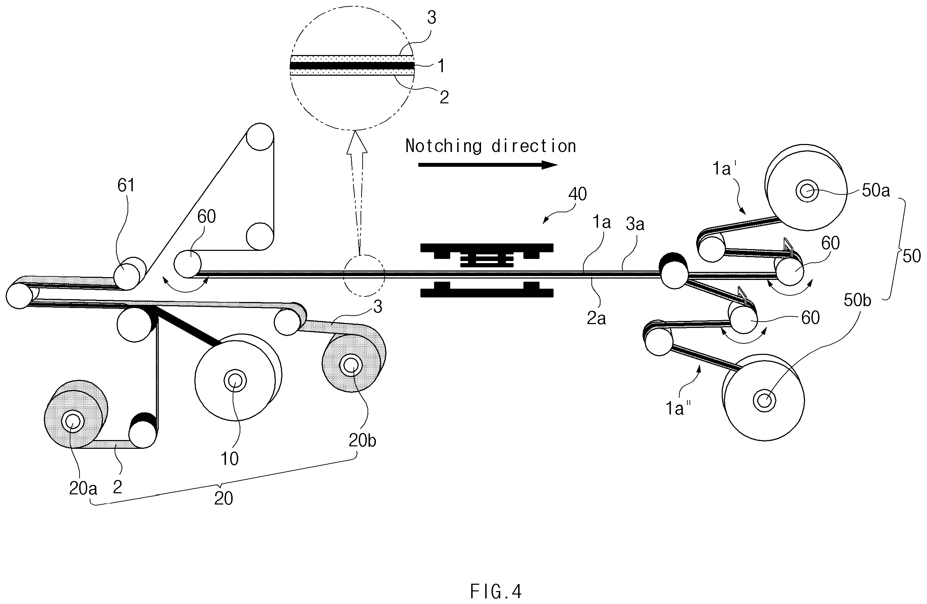

Referring to FIG. 4 that illustrates the simplified notching system according to the second embodiment of the present invention, the notching system provided in this embodiment also include an electrode unwinder 10, a film unwinder 20, and a notching device 40, and a rewinder 50.

The electrode sheet 1 provided in this embodiment may also be used for a positive electrode sheet, but if an object of the present invention is to only prevent cutting and breaking, since it is sufficient to provide the protective film 2 at only one side, the notching system according to the first embodiment may be more preferably used in terms of production costs. Thus, since the purpose of this embodiment is to prevent the scratches caused by scattering or smearing of graphite powder on the electrode sheet 1, it is preferable to use a negative electrode sheet. That is, the electrode sheet 1 provided in this embodiment is provided by applying negative electrode slurry on a surface of a negative electrode collector made of copper.

The film unwinder 20 includes a first film unwinder 20a, from which the protective film 2 stacked on a bottom surface of the electrode sheet 1 is unwound, and a second film unwinder 20b, from which a protective film 3 stacked on a top surface of the electrode sheet 1 is wound (here, the top surface and the bottom surface are defined based on a vertical direction when entering a notching device).

The protective films 2 and 3 wound around the first film unwinder 20a and the second film unwinder 20b may be basically provided to have the same material and the same thickness, but the protective films 2 and 3, which are hit when being put into the notching device so as to be notched, may have a thinner thickness or be made of a different material so as not to affect processability or to minimize the effect thereof.

Each of the protective films 2 and 3 respectively provided on the first film unwinder 20a and the second film unwinder 20b may be wound with a length greater than that of the electrode sheet 1 and thus may be unwound without being disconnected while the electrode sheet is continuously unwound.

In addition, the protective films 2 and 3 and the electrode sheet 1 are unwound from the first film unwinder 20a, the second film unwinder 20b, and the electrode unwinder 10, respectively, and then meet each other in a transfer path as to stacked on each other and are transferred in the stacked state.

That is, as illustrated in FIG. 4, the protective films 2 and 3 are stacked before passing a roller that passes first in the transfer path among a plurality of rollers 61. Then, the protective films 2 and 3 are in close contact with each other on both surfaces of the electrode sheet 1 while each of the rollers 61 moves in the state in which the protective films 2 and 3 are stacked.

Like the first embodiment, each of the protective films 2 and 3 has a width greater than that of the electrode sheet 1 so that portions of the protective films 2 and 3 protrude from both sides of the electrode sheet 1, respectively, when the protective films 2 and 3 are stacked with the electrode sheet 1. Here, the protective films 2 and 3 stacked on one side and the other side of the electrode sheet 1 are provided to have the same width. In addition, the protective film 2 stacked on a bottom surface of the electrode sheet 1 and the protective film 3 stacked on a top surface of the electrode sheet 1 are aligned so that both ends of the protective films 2 and 3 are matched along a width direction with the electrode sheet 1 therebetween.

At least one of the protective films 2 and 3 may protrude along the width direction from the electrode sheet 1 so as to block movement of the electrode sheet 1 during the notching process, and thus, an adhesive may be additionally applied to a portion at which the protective films 2 and 3 face each other to adhere to each other in a state of being aligned with another protective film. Thus, since the electrode sheet 1 is notched in the state in which the movement between the protective films 2 and 3 is prevented, a defect rate may be reduced, and more precise notching may be performed.

In this embodiment as well, a non-coating portion 1' is formed to be disposed at a center in a longitudinal direction of the electrode sheet 1, and the electrode sheet 1 and the protective films 2 and 3 are notched so that the non-coating portion 1' is cut in the notching device 40 and thus divided into a first processing body 1a' and a second processing body 1a". In addition, the rewinder 50 also includes a first rewinder 50a around which the first processing body 1a' is wound and a second rewinder 50b around which the second processing body 1a" is wound so as to wind the first processing body 1a' and the second processing body 1a", respectively.

Furthermore, as described above, the notching device 40 provided in this embodiment also has a structure including a lower mold 42 disposed below the electrode sheet 1 and an upper mold 41 disposed above the electrode sheet 1 to hit the non-coating portion 1', thereby molding an electrode tab T. In addition, a film collecting device (not shown) may be further provided to separate and collect the protective films 2 and 3 from the notched electrode sheet 1. Here, the film collecting device may have a structure coupled to the upper mold 41 or the lower mold 42 and may be configured to peel off the protective films 2 and 3 while passing through the notching device 40.

In the present invention having the configuration as described above, since the notching processing is performed in the state in which the electrode sheet 1 and the protective film are stacked, the problem such as the cutting and tearing of the electrode sheet 1 and the problem of causing the scratches due to the separation of the graphite powder from the surface of the electrode sheet 1 may be solved.

That is, the protective film may disperse the tension applied to the electrode sheet to restrict the cutting, and the surface of the electrode sheet may be covered by the protective film to fundamentally prevent the graphite powder from being separated.

In addition, the tension roller may be further provided to adjust the tension applied to the electrode sheet being transferred.

The protective film may have the width greater than that of the electrode sheet so that the portion of the protective film protrudes from each of both the sides of the electrode sheet when the protective film is stacked with the electrode sheet, and thus, when the electrode sheet and the protective film are attached to each other, even though the electrode sheet is separated from the regular position, the possibility of the separation of the protective film may be reduced.

The electrode sheet 1 may be divided into the first processing body 1a' and the second processing body 1a" after being subjected to the notching processing and then collected from each of the first rewinder and the second rewinder so as to be collected for each processed product.

The film collecting device that collects the protective film from the notched electrode sheet may be further provided, and thus, the protective film may be provided in the detached state.

### [Description of the Symbols]

1: Electrode sheet
2, 3: Protective film
10: Electrode unwinder
20: Film unwinder
20a : First film unwinder
20b : Second film unwinder
40: Notching device
50: Rewinder

## Claims

1. A notching system for an electrode sheet (1), the notching system comprising:
an electrode unwinder (10) comprising a wound electrode sheet (1) coated with slurry on a surface of a collector, from which the electrode sheet (1) is unwound;
a film unwinder (20) comprising a wound protective film (2) and from which the protective film (2) is unwound and stacked on the electrode sheet (1);
a notching device (40) configured to notch a non-coating portion (1'), which is a portion that is not coated with the slurry on the electrode sheet (1), when provided in the state in which the protective film (2) is stacked on the electrode sheet (1); and
a rewinder (50) configured to wind the notched electrode sheet (1),
**characterized in that** the protective film (2) has a width greater than that of the electrode sheet (1) so that a portion of the protective film (2) protrudes from each of both sides of the electrode sheet (1) when the protective film (2) is stacked on the electrode sheet (1).

2. The notching system of claim 1, further comprising a tension roller (60) disposed in a path along which the electrode sheet (1) and the protective film (2) are transferred in the stacked state, wherein the tension roller (60) is slid in a predetermined direction to apply a pressure to the electrode sheet (1) and the protective film (2) so that tension is maintained within a predetermined range.

3. The notching system of claim 1, wherein the electrode sheet (1) is a positive electrode sheet coated with positive electrode slurry on a surface of a positive electrode collector, and
the protective film (2) is stacked to be disposed on a bottom surface of the positive electrode sheet (1) when the positive electrode sheet (1) enters the notching device (40).

4. The notching system of claim 1, wherein the electrode sheet (1) is a negative electrode sheet coated with negative electrode slurry on a surface of a negative electrode collector, and
the film unwinder (20) comprises: a first film unwinder (20a) from which the protective film (2) stacked on a bottom surface of the electrode sheet (1) is unwound; and a second film unwinder (20a) from which another protective film (3) stacked on a top surface of the electrode sheet (1) is unwound so that the protective films (2, 3) are stacked on each of the top surface and the bottom surface of the negative electrode sheet (1) when the negative electrode sheet (1) enters the notching device (40).

5. The notching system of claim 4, wherein the protective films (2, 3) have a width greater than that of the electrode sheet (1) so that a portion of the protective films (2, 3) protrudes from each of both sides of the electrode sheet (1) when the protective films (2, 3) are stacked on the electrode sheet (1), and
the protective film (2) stacked on the bottom surface of the electrode sheet (1) and the protective film (3) stacked on the top surface of the electrode sheet (1) are aligned with each other so that both ends of the protective films (2, 3) are matched along a width direction with the electrode sheet (1) therebetween.

6. The notching system of claim 1, wherein the non-coating portion (1") is formed to be disposed at a center along a longitudinal direction of the electrode sheet (1),
the electrode sheet (1) and the protective film (2) are notched so that the non-coating portion (1") is cut in the notching device (40) so as to be divided into a first processing body (1a') and a second processing body (1a"), and
the rewinder (50) comprises: a first rewinder (50a) around which the first processing body (1a') is wound; and a second rewinder (50b) around which the second processing body is wound (1a").

7. The notching system of claim 6, wherein one of the first rewinder (50a) and the second rewinder (50b) is disposed at a first height lower than the notching device (40), and the other one is disposed at a second height higher than the notching device (40).

8. The notching system of claim 1, wherein the notching device (40) comprises:
a lower mold (42) disposed below the electrode sheet (1); and
an upper mold (42) disposed above the electrode sheet (1),
wherein, when the electrode sheet (1) is disposed between the lower mold (42) and the upper mold (41), the upper mold (41) or the lower mold (42) is configured to hit the non-coating (1") portion of the electrode sheet (1) so that the electrode sheet (1) is processed to be molded in a predetermined shape.

9. The notching system of any one of claims 1 to 8, further comprising a film collecting device configured to separate and collect the protective film (2) from the notched electrode sheet (1).

## Patentansprüche

1. Kerbsystem für eine Elektrodenbahn (1), wobei das Kerbsystem umfasst:
eine Elektrodenabwickeleinrichtung (10), welche eine aufgewickelte Elektrodenbahn (1) umfasst, die auf einer Fläche eines Kollektors mit einer Aufschlämmung beschichtet ist, von welcher die Elektrodenbahn (1) abgewickelt wird;
eine Folienabwickeleinrichtung (20), welche eine aufgewickelte Schutzfolie (2) umfasst und von welcher die Schutzfolie (2) abgewickelt wird und auf die Elektrodenbahn (1) gestapelt wird;
eine Kerbvorrichtung (40), welche dazu eingerichtet ist, einen nicht beschichteten Abschnitt (1') zu kerben, welcher ein Abschnitt ist, der nicht mit der Aufschlämmung auf der Elektrodenbahn (1) beschichtet ist, wenn sie in dem Zustand bereitgestellt ist, in welchem die Schutzfolie (2) auf die Elektrodenbahn (1) gestapelt ist; und
eine Aufwickeleinrichtung (50), welche dazu eingerichtet ist, die gekerbte Elektrodenbahn (1) aufzuwickeln,
**dadurch gekennzeichnet, dass** die Schutzfolie (2) eine Breite aufweist, welche größer als die der Elektrodenbahn (1) ist, so dass ein Abschnitt der Schutzfolie (2) von jeder beider Seiten der Elektrodenbahn (1) vorsteht, wenn die Schutzfolie (2) auf die Elektrodenbahn (1) gestapelt ist.

2. Kerbsystem nach Anspruch 1, ferner umfassend eine Spannrolle (60), welche in einem Pfad angeordnet ist, entlang welchem die Elektrodenbahn (1) und die Schutzfolie (2) in dem gestapelten Zustand transferiert werden, wobei die Spannrolle (60) in einer vorbestimmten Richtung verschoben wird, um einen Druck auf die Elektrodenbahn (1) und die Schutzfolie (2) auszuüben, so dass eine Spannung innerhalb eines vorbestimmten Bereichs gehalten wird.

3. Kerbsystem nach Anspruch 1, wobei die Elektrodenbahn (1) eine Bahn für eine positive Elektrode ist, welche auf einer Fläche eines Kollektors für eine positive Elektrode mit einer Aufschlämmung für eine positive Elektrode beschichtet ist, und
die Schutzfolie (2) derart gestapelt wird, dass sie an einer unteren Fläche der Bahn (1) für eine positive Elektrode angeordnet ist, wenn die Bahn (1) für eine positive Elektrode in die Kerbvorrichtung (40) eintritt.

4. Kerbsystem nach Anspruch 1, wobei die Elektrodenbahn (1) eine Bahn für eine negative Elektrode ist, welche auf einer Fläche eines Kollektors für eine negative Elektrode mit einer Aufschlämmung für eine negative Elektrode beschichtet ist, und
wobei die Folienabwickeleinrichtung (20) umfasst: eine erste Folienabwickeleinrichtung (20a), von welcher die Schutzfolie (2), welche auf eine untere Fläche der Elektrodenbahn (1) gestapelt ist, abgewickelt wird; und eine zweite Folienabwickeleinrichtung (20a), von welcher eine weitere Schutzfolie (3) abgewickelt wird, welche auf eine obere Fläche der Elektrodenbahn (1) gestapelt ist, so dass die Schutzfolien (2, 3) auf jede der oberen Fläche und der unteren Fläche der Bahn (1) für eine negative Elektrode gestapelt werden, wenn die Bahn (1) für eine negative Elektrode in die Kerbvorrichtung (40) eintritt.

5. Kerbsystem nach Anspruch 4, wobei die Schutzfolien (2, 3) eine Breite aufweisen, welche größer als die der Elektrodenbahn (1) ist, so dass ein Abschnitt der Schutzfolien (2, 3) von jeder beider Seiten der Elektrodenbahn (1) vorsteht, wenn die Schutzfolien (2, 3) auf die Elektrodenbahn (1) gestapelt sind, und
die Schutzfolie (2), welche auf die untere Fläche der Elektrodenbahn (1) gestapelt ist, und die Schutzfolie (3), welche auf die obere Fläche der Elektrodenbahn (1) gestapelt ist, derart zueinander ausgerichtet sind, dass beide Enden der Schutzfolien (2, 3) mit der Elektrodenbahn (1) dazwischen entlang einer Breitenrichtung aneinander angepasst sind.

6. Kerbsystem nach Anspruch 1, wobei der nicht beschichtete Abschnitt (1") derart gebildet ist, dass er entlang einer longitudinalen Richtung der Elektrodenbahn (1) in einer Mitte angeordnet ist,
die Elektrodenbahn (1) und die Schutzfolie (2) derart gekerbt sind, dass der nicht beschichtete Abschnitt (1") in der Kerbvorrichtung (40) derart geschnitten wird, dass er in einen ersten Verarbeitungskörper (1a') und einen zweiten Verarbeitungskörper (1a") geteilt ist, und
die Aufwickeleinrichtung (50) umfasst: eine erste Aufwickeleinrichtung (50a), um welche der erste Verarbeitungskörper (1a') gewickelt wird; und eine zweite Aufwickeleinrichtung (50b), um welche der zweite Verarbeitungskörper (1a") gewickelt wird.

7. Kerbsystem nach Anspruch 6, wobei eine aus der ersten Aufwickeleinrichtung (50a) und der zweiten Aufwickeleinrichtung (50b) in einer ersten Höhe angeordnet ist, welche niedriger ist als die Kerbvorrichtung (40), und die andere in einer zweiten Höhe angeordnet ist, welche höher ist als die Kerbvorrichtung (40).

8. Kerbsystem nach Anspruch 1, wobei die Kerbvorrichtung (40) umfasst:
eine untere Form (42), welche unterhalb der Elektrodenbahn (1) angeordnet ist; und
eine obere Form (42), welche oberhalb der Elektrodenbahn (1) angeordnet ist, wobei, wenn die Elektrodenbahn (1) zwischen der unteren Form (42) und der oberen Form (41) angeordnet ist, die obere Form (41) oder die untere Form (42) dazu eingerichtet ist, den nicht beschichteten (1") Abschnitt der Elektrodenbahn (1) derart zu treffen, dass die Elektrodenbahn (1) derart verarbeitet wird, dass sie in eine vorbestimmte Form geformt wird.

9. Kerbsystem nach einem der Ansprüche 1 bis 8, ferner umfassend eine Foliensammelvorrichtung, welche dazu eingerichtet ist, die Schutzfolie (2) von der gekerbten Elektrodenbahn (1) zu trennen und zu sammeln.

## Revendications

1. Système d'entaillage pour une feuille d'électrode (1), le système d'entaillage comprenant :
un dérouleur d'électrode (10) comprenant une feuille d'électrode (1) enroulée revêtue d'une suspension sur une surface d'un collecteur, à partir duquel la feuille d'électrode (1) est déroulée ;
un dérouleur de film (20) comprenant un film protecteur (2) enroulé et à partir duquel le film protecteur (2) est déroulé et empilé sur la feuille d'électrode (1) ;
un dispositif d'entaillage (40) configuré pour entailler une partie non revêtue (1'), qui est une partie qui n'est pas revêtue de la suspension sur la feuille d'électrode (1), lorsqu'elle est fournie dans l'état où le film protecteur (2) est empilé sur la feuille d'électrode (1) ; et
un enrouleur (50) configuré pour enrouler la feuille d'électrode (1) entaillée, **caractérisé en ce que** le film protecteur (2) présente une largeur supérieure à celle de la feuille d'électrode (1) de sorte qu'une partie du film protecteur (2) fasse saillie à partir de chacun des deux côtés de la feuille d'électrode (1) lorsque le film protecteur (2) est empilé sur la feuille d'électrode (1).

2. Système d'entaillage selon la revendication 1, comprenant en outre un galet tendeur (60) disposé dans un trajet le long duquel la feuille d'électrode (1) et le film protecteur (2) sont transférés à l'état empilé, dans lequel le galet tendeur (60) est glissé dans une direction prédéterminée pour appliquer une pression sur la feuille d'électrode (1) et le film protecteur (2) de sorte que la tension soit maintenue dans une plage prédéterminée.

3. Système d'entaillage selon la revendication 1, dans lequel la feuille d'électrode (1) est une feuille d'électrode positive revêtue d'une suspension d'électrode positive sur une surface d'un collecteur d'électrode positive, et
le film protecteur (2) est empilé pour être disposé sur une surface inférieure de la feuille d'électrode positive (1) lorsque la feuille d'électrode positive (1) pénètre dans le dispositif d'entaillage (40).

4. Système d'entaillage selon la revendication 1, dans lequel la feuille d'électrode (1) est une feuille d'électrode négative revêtue d'une suspension d'électrode négative sur une surface d'un collecteur d'électrode négative, et
le dérouleur de film (20) comprend : un premier dérouleur de film (20a) à partir duquel le film protecteur (2) empilé sur une surface inférieure de la feuille d'électrode (1) est déroulé ; et un deuxième dérouleur de film (20b) à partir duquel un autre film protecteur (3) empilé sur une surface supérieure de la feuille d'électrode (1) est déroulé, de sorte que les films protecteurs (2, 3) soient empilés sur chacune de la surface supérieure et de la surface inférieure de la feuille d'électrode négative (1) lorsque la feuille d'électrode négative (1) pénètre dans le dispositif d'entaillage (40).

5. Système d'entaillage selon la revendication 4, dans lequel les films protecteurs (2, 3) présentent une largeur supérieure à celle de la feuille d'électrode (1), de sorte qu'une partie des films protecteurs (2, 3) fasse saillie à partir de chacun des deux côtés de la feuille d'électrode (1) lorsque les films protecteurs (2, 3) sont empilés sur la feuille d'électrode (1), et
le film protecteur (2) empilé sur la surface inférieure de la feuille d'électrode (1) et le film protecteur (3) empilé sur la surface supérieure de la feuille d'électrode (1) sont alignés l'un avec l'autre de sorte que les deux extrémités des films protecteurs (2, 3) se rejoignent le long d'une direction de largeur avec la feuille d'électrode (1) entre celles-ci.

6. Système d'entaillage selon la revendication 1, dans lequel la partie non revêtue (1'') est formée pour être disposée au niveau d'un centre le long d'une direction longitudinale de la feuille d'électrode (1),
la feuille d'électrode (1) et le film protecteur (2) sont entaillés de sorte que la partie non revêtue (1") soit découpée dans le dispositif d'entaillage (40) de façon à être divisée en un premier corps de traitement (1a') et un deuxième corps de traitement (1a"), et
l'enrouleur (50) comprend : un premier enrouleur (50a) autour duquel est enroulé le premier corps de traitement (1a') ; et un deuxième enrouleur (50b) autour duquel est enroulé le deuxième corps de traitement (1a").

7. Système d'entaillage selon la revendication 6, dans lequel l'un du premier enrouleur (50a) et du deuxième enrouleur (50b) est disposé à une première hauteur supérieure à celle du dispositif d'entaillage (40), et l'autre est disposé à une deuxième hauteur supérieure à celle du dispositif d'entaillage (40).

8. Système d'entaillage selon la revendication 1, dans lequel le dispositif d'entaillage (40) comprend :
un moule inférieur (42) disposé au-dessous de la feuille d'électrode (1) ; et
un moule supérieur (42) disposé au-dessus de la feuille d'électrode (1),
dans lequel, lorsque la feuille d'électrode (1) est disposée entre le moule inférieur (42) et le moule supérieur (41), le moule supérieur (41) ou le moule inférieur (42) est configuré pour heurter la partie non revêtue (1") de la feuille d'électrode (1) de sorte que la feuille d'électrode (1) soit traitée pour être moulée en une forme prédéterminée.

9. Système d'entaillage selon l'une quelconque des revendications 1 à 8, comprenant en outre un dispositif de collecte de film configuré pour séparer le film protecteur (2) de la feuille d'électrode (1) entaillée et collecter celui-ci.
